# EUROPEAN PATENT APPLICATION

(11) **EP 2 666 610 A1**
(43) Date of publication of application: **27.11.2013**
(21) Application number: 12460024.8
(22) Date of filing: 24.05.2012
(51) Int. Cl.: B29C 45/14, B29D 11/00

(54) **Method of manufacturing a shape with a lenticular stereoscopic image from plastic materials on a plastic substrate**

(71) Applicant: Czajkowski, Wojciech, 92-508 Lodz (PL); Trella, Andrzej, 92-508 Lodz (PL)
(72) Inventor: Czajkowski, Wojciech, 92-508 Lodz (PL); Trella, Andrzej, 92-508 Lodz (PL)
(74) Representative: Dziubinska, Jolanta

(57) **Abstract**

The solution according to the invention concerns the method of the manufacture of a shape with lenticular stereoscopic image from plastic materials on a plastic material, specially intended for the manufacture of information, advertizing, packaging, decorative and toy elements on the basis of injection moulding of shapes with stereoscopic image made of plastic materials in injection moulds.

According to the invention, the method consists in placing transparent material that accumulates electric charges (1) especially the foil with lenticular halftone printing especially on the underside turned by 180° along vertical or horizontal axis inside the mould (2), and joining the whole in a permanent way by injecting transparent thermoplastic material into the mould.

In the method according to the invention the formed element with lenticular stereogram may be overmoulded with the plastic material of any colour in the thermoplastic mould.

## Description

The subject of the invention is the method of the manufacture of a shape with lenticular stereoscopic image from plastic materials on a plastic material, intended especially for the manufacture of information, advertising, packaging, decorative and toy elements based on injection moulding of shapes with lenticular stereoscopic image from plastic materials in injection moulds.

From the Polish patent application no. P. 385696 the method of obtaining of 3D drawings/ labels or packagings is known, consisting in injecting light transmitting monolithic plastic material into the mould containing a label drawing in the nest of one part, on the material not accumulating electric charges and having proper thermal conduction, air permeability, and rigidity, which has an imprint accordant with the other part of the mould containing a parallel lenticular generator, and the other part of the mould containing sequences of longitudinal lens shaped as cylinders, parts of cylinders or prisms, whose number per one inch is strictly determined and makes a lenticular generator, which gives a drawing with a 3D image, making a homogeneous whole with the label or the packaging.

In the known method of proceeding the joining of the label with a drawing on its surface inside the mould does not result in a monolithic unification of particular layers, with simultaneous degradation of printing, especially in the place of injection.

There is known halftone printing, in which pictures consist of stripes of the right and left image alternately, and the transparent foils with linear cylindrical or prismatic lens placed upon them guarantee the separation of images.

There is also known lenticular stereogram, in which two stereoscopic half images intended for both eyes (or a bigger number of indirect images) are placed on a carrier alternately in the form of stripes of microscopic width. Transparent foil with embossed halftone in the form of cylindrical convex lens on the one side is placed on the carrier. Due to the halftone viewer's eyes can see the image of only some stripes of the picture. If the starting material for such a stereogram consists of only two stereoscopic half images, the right eye can see only the right half image, and the left eye can see only the left half image. If there is more half images, a still more perfect illusion of space is achieved when looking at a changing angle.

There is also known overmoulding of a transparent smooth central part with plastic material in any colour.

The aim of the invention is the method of proceeding allowing the manufacture of a shape with stereoscopic image, in any graphic form, placed on material accumulating electric charges, especially on foil used for the manufacture of information, advertising, packaging, decorative and toy elements, on packagings or their closures.

The essence of the invention consists in the fact that the transparent material accumulating electric charges, especially the foil with embossed lenticular halftone printing, especially from the underside, turned by 180° along vertical or horizontal axis, is placed inside the mould, and the whole is joined in a permanent way by the injection of transparent thermoplastic plastic material into the mould.

According to the invention the formed element with lenticular stereogram is subjected to overmoulding in a mould with thermoplastic plastic material of any colour.

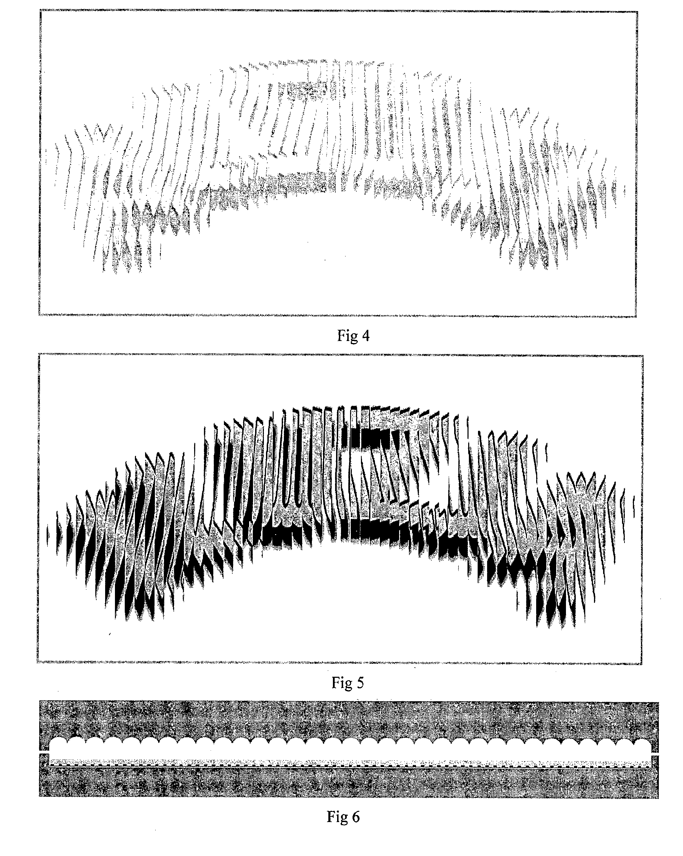

Following the invention, when obtaining the shape with stereoscopic image on information, advertising, packaging, decorative and toy materials, in the nest of the mould there is placed graphic material from transparent plastic material accumulating electric charges (especially polypropylene PP) in the form of transparent foil with embossed lenticular halftone printing, especially from the underside, turned by 180° along vertical or horizontal axis (Fig. 5). From the injection side of the mould there is installed an element which is a negative reproduction of the configuration of linear lenses (Fig. 6); the number of lines of negative lenses corresponds to the number of printing lines of lenticular halftones on the underside of the foil placed on the opposite side of the closing, and is generally called LPI (lines per inch). On the underside of the foil with halftone printing there may be placed a uniform colour background of any colour, being a background for halftone printing.

According to the invention, the formed element with lenticular stereogram is fully made from transparent plastic material.

In the solution according to the invention the accumulation of electric charges additionally facilitates precise placing of transparent foil with embossed stereogram into the mould due to electrostatics; especially when the nest is situated vertically, the foil is attracted by the mould due to potential difference. Gravitational and vacuum methods of placing are also acceptable.

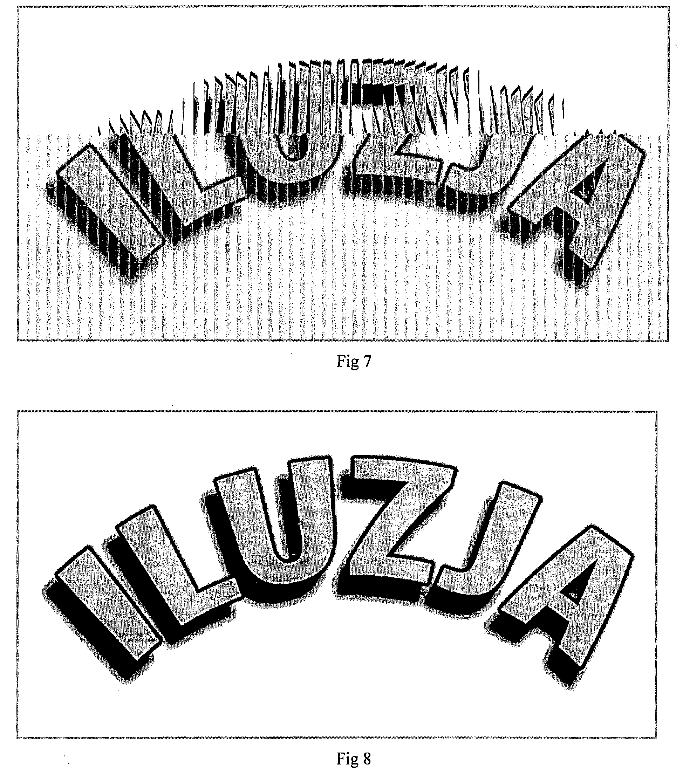

On the graphic element into the mould there is injected transparent thermoplastic plastic material, favourably the same as the material of the graphic carrier, and due to reproduced negative linear lenses lenticular plate is formed, due to which formerly prepared graphic element is visible as an illusory spatial image, or other visual effect, which is schematically illustrated by Fig. 7.

In the solution according to the invention the adopted procedure allows to produce image elements and obtain the effect of binocular vision, giving the impression of depth. The injection of transparent, thermoplastic plastic material is made above the surface of the label. The injection of the material may be made centrally, from the side, or at any place above the label; the thickness of the injected transparent material is strictly determined and depends on LPI and the angle of view determining the curvature of the focal length, which defines the thickness. The injected transparent thermoplastic plastic material, favourably the same as the transparent halftone carrier of graphic printing, guarantees homogeneous and durable structure of the shape. The following plastic materials may be used, for example, for the purpose: polystyrene PS, polypropylene PP, polymethyl methacrylate PMMA, polyethylene terephthalate PET, polyvinyl chloride PVC, polycarbonate PC.

Following the method according to the invention there are manufactured information, advertizing, packaging, decorative and toy elements with image giving the impression of illusory space or animation due to the use and combination of technology of obtaining lenticular stereograms by halftone printing and overmoulded lenticular plate with properly shaped lenses or linear prisms. The achieved effect of optical illusion depends on a precise and properly prepared printing on the underside of the transparent graphic carrier. The effect may give an impression of 3D depth, if the lines of the lenses are arranged vertically and the spatial image appears. Acting in accordance with the invention the impression of movement is obtained by changes (flip); depending on the number of images and the angle of view different images can be seen alternately. A favourable effect is achieved when the lines are arranged horizontally in relation to the viewer. It is also possible to achieve the impression of movement by transformation (morphing), i.e., smooth transition from one image into another one, or by animation - showing some phases of movement, or zooming in and out (zoom). The mix of the above mentioned techniques giving the impression of movement is also possible. The schematic illustration of the effect of the appearance of the image, where a fragment of halftone printing is visible in the upper part, and the effect after the injection of the lenticular is visible in the lower part, is presented in Fig. 7

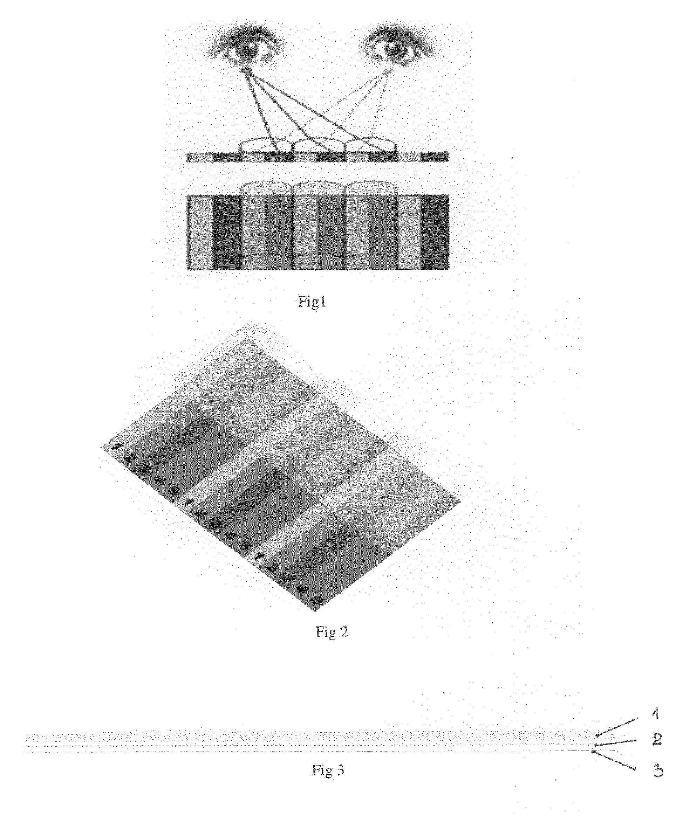

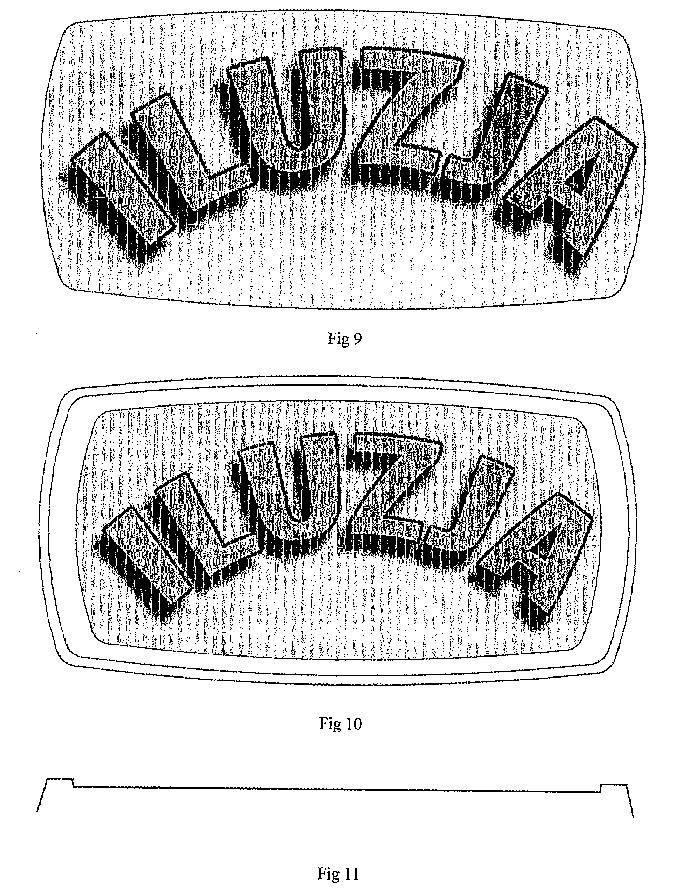

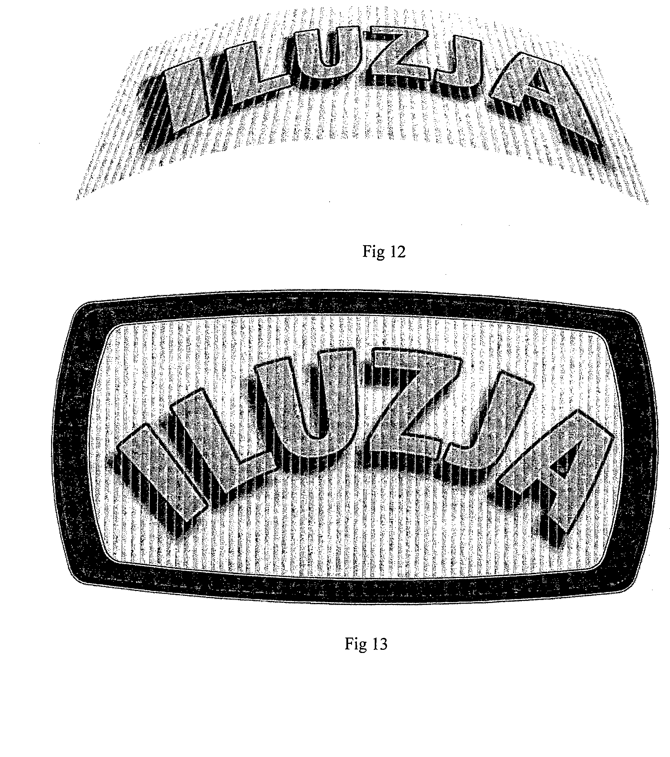

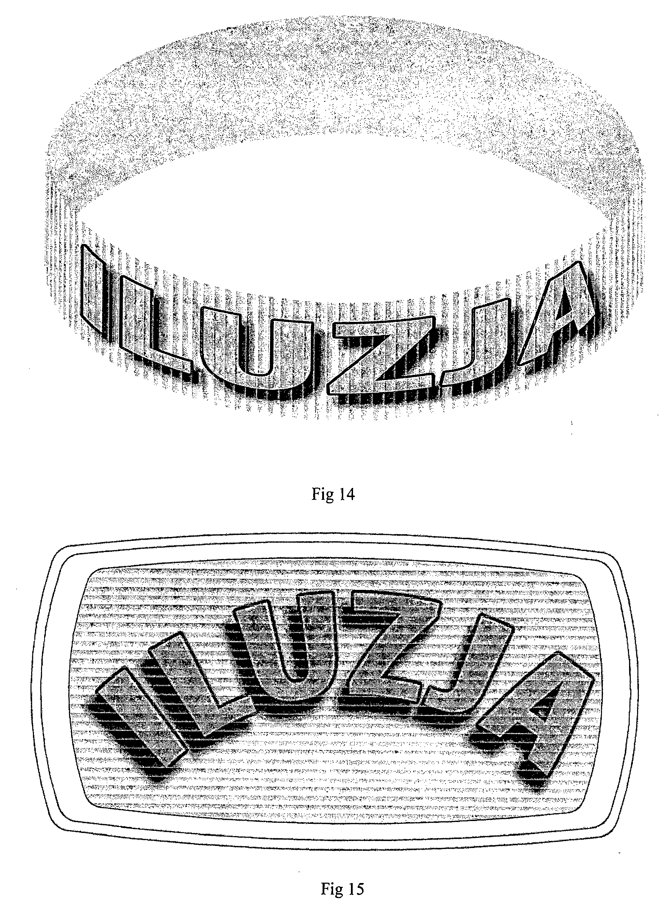

Following the method according to the invention, it is possible to obtain different shapes on the plane and on solids, e.g., cylinders or their sections, cones or their fragments, and polyhedrons or their fragments, containing stereoscopic image on the outside at the imprint of any image fixed at the underside of the shape; it is worth stressing that the image with linear lens may be made only by a part of the shape (Fig. 9), the remaining part being an arbitrary polyhedron, e.g., the covering of the box (Fig. 10). The reproduction of the negative of linear lens may have the shape of an arbitrary solid of revolution or polyhedron. Fig. 12 shows an example of an embodiment on a section of a cylinder; Fig. 14 shows an example of an embodiment of the shape in the form of cylinder, where the above described graphic material is placed inside the cylinder. With properly constructed injection form it is possible to obtain multicolour shape in the following way: a part with the reproduction of the linear lens and the above described nest for graphic material is injected with transparent material in order to retain the possibility of obtaining a stereoscopic image, and the remaining part of the shape of the polyhedron, being, e.g., a box cover, is injected in the second phase with another colour, which is illustrated in Fig. 13. The essence of multicolour injection consists in simultaneous injecting of plastic materials into a mould fixed to a revolving or sliding plate from a number of systems - the material of different colour from each system. The solution according to the invention has been presented on illustrations and examples of embodiments not limiting the application of the invention. On the enclosed illustrations, Fig. 1 presents lenticular stereogram; Fig. 2 presents a bigger number of indirect images when looking at the changing angle, which gives still more perfect illusion of space; Fig. 3 presents a schema of imprint on transparent material (foil), where (1) - means transparent foil being the proper side of the label, (2) - halftone printing turned along horizontal or vertical axis by 180°, (3) - means a uniform colour background for the printing in any colour. In the solution according to the invention there may also appear the fourth layer securing the printing additionally, in the form of, e.g., varnish; Fig. 4 shows, in a big enlargement, prepared halftone graphic material in the form of lenticular stereogram printed on the foil and turned by 180° from the underside in such a way that, after turning, the proper image of the imprint shall be on the underside; Fig. 5 shows lenticular stereogram (in a big enlargement) from the upper side, where the imprint is on the underside and the transparent foil is on the upper side, and the graphic material is placed in the mould in this form. Fig. 6 shows a scheme of a not closed injection mould, where the upper side is a negative of linear lens, and the underside is a nest for graphic material presented schematically like in Fig. 2; Fig. 7 presents, in a big close-up, the way of making the image and the difference between the imprint and the lenticular lens, partly transferred on the imprint. On the figure the compliance of LPI (lines per inches) between the number of halftones on the graphic material and the number of cylinders or prisms on the plate of the linear lens is visible. Figure 8 shows the view of the effect of optical illusion after injecting transparent material into the mould, where the reproduced lens transforms the graphic material from Fig. 5 into optical illusion. Fig. 9 presents an example of the embodiment of the invention in the form of a shape being a fragment of the plane; Fig. 10 presents an example of the embodiment of the shape in the form of a polyhedron - the view from above; Fig. 11 presents a cross section of an example of the embodiment of the shape in the form of a polyhedron; Fig. 12 presents an example of the embodiment of the shape in the form of a section of a cylinder; the negative of linear lens may be reproduced on an arbitrary solid of revolution or polyhedron; Fig. 13 presents a multicolour shape; Fig. 14 illustrates an example of a shape in the form of a cylinder.

### Example 1

In the nest of the mould there is placed graphic material accumulating electric charges in the form of lenticular stereogram with the use and application of halftone printing. The upper part of the transparent material accumulating electric charges is made of foil, on its underside an adequately prepared halftone printing is made, which is turned along the horizontal axis by 180° and which may be covered, as the next layer, with uniform colour background in any colour as a background for halftone printing. It is also possible to apply another protective layer, e.g., varnish. Fig. 3 presents a schema of graphic material, where the transparent material (foil) is the electrostatic material (1), the line, on the underside of the transparent foil there is printed halftone stereogram (2), covered with uniform colour background (3).

### Example 2

Acting as in example 1, the realization of halftone printing from the side of the uniform colour background is presented in Fig. 4.

### Example 3

Acting as in example 1, on the transparent graphic carrier (foil) horizontal halftone printing and the reproduction of horizontal negative of lens are made in order to obtain the stereogram giving the illusion of the change of the image (flip, morphing) (Fig. 15).

### Example 4

Acting as in example 1, graphic carrier with halftone printing is placed in the mould, then thermoplastic material shaped as the graphic carrier is injected, and then the remaining part of the shape is overmoulded with the plastic material as a result of rotation or sliding (Fig. 13).

## Claims

1. The method of the manufacture of the shape with stereoscopic lenticular image from plastic materials on a plastic material by placing the foil with a drawing in the mould, injecting plastic material and joining the label with the mould in a permanent way, **characterized by** the fact that transparent material accumulating electric charges (1) particularly the foil with lenticular halftone printing particularly from the underside, turned by 180° along vertical or horizontal axis, is placed inside the mould (2), and the whole is joined in a permanent way by injecting transparent thermoplastic material into the mould.

2. The method according to the claim 1 **characterized by** the fact that the formed element with lenticular stereogram is subjected to overmoulding in a mould with thermoplastic material of any colour.

## Amended claims

### Amended claims in accordance with Rule 137(2) EPC.

**1.** The method of the manufacture of the moulder with stereoscopic lenticular image from plastic materials on a plastic material by placing a transparent film with an overprint into the injection mould, injecting plastic material and joining the film with the moulder in a permanent way, **characterized by** the fact that the transparent material accumulating electric charges in the form of the film (2) with lenticular halftone printing placed on the underside and rotated by 180° along vertical axis (mirror printing) is placed inside the injection mould with the printing turned to the smooth surface of the injection mould and the film is joined in a permanent way with transparent thermoplastic material by its injection onto the unprinted surface of the film, while on the opposite side of the injection mould there is an element with reproduced negative line lenticular lenses.

**2.** The method according to claim 1 **characterized by** the fact that the formed element with lenticular stereogram is subjected to post-injection with thermoplastic material of any colour in the part of the moulder not having reproduced line lenticular lenses in the same process in the injection mould.
